(19) **Europäisches Patentamt**
**European Patent Office**
**Office européen des brevets**

(11) **EP 4 760 559 A1**

(12) **EUROPEAN PATENT APPLICATION**

(43) Date of publication:
**17.06.2026 Bulletin 2026/25**

(21) Application number: **24383378.7**

(22) Date of filing: **16.12.2024**

(51) International Patent Classification (IPC):
*G06F 21/50* (2013.01)    *H04L 9/40* (2022.01)

(52) Cooperative Patent Classification (CPC):
**H04L 63/1425; G06F 21/50**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Telefonica Innovacion Digital SL 28050 Madrid (ES)**

(72) Inventors:
• **Almasan Puscas, Felician Paul**
  **28050 Madrid (ES)**
• **Marin, Eduard**
  **28050 Madrid (ES)**
• **Alvarez Terribas, Francisco**
  **28050 Madrid (ES)**

(74) Representative: **Carlos Hernando, Borja Garrigues IP, S.L.P. Plaza de Colón, 2 28046 Madrid (ES)**

(54) **METHOD, SYSTEM AND COMPUTER PROGRAMS FOR SYSTEM LOG COMPRESSION**

(57) A method, system and computer program for system log compression are provided. The method comprises: obtaining at least one first batch of complete and untampered system log entries; representing the system log entries as a provenance graph, with nodes of the graph representing system entities and edges representing relationships between the system entities, wherein each node and edge of the graph is assigned a set of features; embedding the system entities and relationships within the provenance graph into a continuous multidimensional vector space using an embedding algorithm; identifying expected behavior deviations of the system log entries using the embedded continuous vector space; comparing the identified system log entries that deviate from an expected behavior with a given threshold; and labeling system log entries as anomalous if their deviation is different to or falls outside the given threshold, and compressing the system log entries by discarding those are not labeled as anomalous.

**Fig. 2**

**Description**

**TECHNICAL FIELD**

The present invention generally relates to log analysis and anomaly detection techniques. Specifically, it relates to a method, system, and computer program for system log compression.

**BACKGROUND OF THE INVENTION**

FLASH [4] leverages graph representation learning to detect Advanced Persistent Threats (APTs) in large provenance graphs. In their method, they use a Word2Vec-based semantic encoder to capture temporal ordering of events and meaningful node attributes like process names and file paths in combination with a contextual encoder based on a Graph Neural Network (GNN) to process graph structures. Specifically, they use the GraphSAGE [8] model. The resulting embeddings are stored in an embedding recycling database to allow reuse of node representations, significantly reducing the computational demands during real-time detection. These embeddings are then used by a classifier for real-time intrusion detection.

WATSON [5] is an automated behavior abstraction tool that infers high-level system behaviors from low-level audit logs, aimed at reducing the analysis workload for security analysts. By capturing the contextual semantics of log events through a translation-based embedding model, WATSON maps events into a semantic space that clusters similar behaviors, allowing analysts to investigate representative behaviors rather than individual log events. WATSON groups system activities into behavior subgraphs, each representing sequences of causally related actions such as file access or network connections, and these clusters are then analyzed for unusual patterns that may indicate malicious activity. This approach not only improves detection accuracy but also supports large-scale log analysis by drastically reducing the number of events needing review.

KAIROS [1] employs GNNs to capture both temporal and spatial relationships of system events within provenance graphs. One key difference with Flash is that KAIROS uses hierarchical feature hashing to create the embeddings while Flash uses a Word2Vec model. In addition, KAIROS uses a temporal GNN, and they evaluate it for every new system behavior, different than FLASH where they leverage an embedding database. This method quantifies the anomalousness of individual system events and reconstructs attack footprints, providing system administrators with a compact yet comprehensive overview of malicious activities.

MAGIC [6] presents a novel method for detecting APTs using self-supervised masked graph representation learning. In this work, the masking procedure consists of partially hiding node features to reduce the computational overhead of the GNN. MAGIC focuses on detecting anomalies in system behaviors through a deep analysis of provenance graphs derived from Audit logs. Unlike previous GNN-based APT detection methods such as KAIROS or FLASH, MAGIC does not require prior knowledge of attacks, making it flexible and capable of handling unseen threats. It operates at both the batched log level and the individual system entity level, employing outlier detection on graph embeddings to identify suspicious activities.

Some patents and patent applications are also known in this field, specifically, US11423146B2 "Provenance-based threat detection tools and stealthy malware detection", CN112765603B "Abnormity tracing method combining system log and origin graph", US20120137367A1 "Continuous anomaly detection based on behavior modeling and heterogeneous information analysis", US12015628B1 "Complex network attack detection method based on cross-host abnormal behavior recognition", and US10038710B2 "Efficient identification of log events in enterprise threat detection".

In spite of these known solutions, they focus only on detecting or identifying anomalies through provenance graphs and they do not provide any methods or techniques for effectively compressing system logs. In modern infrastructures, where logs are generated at high velocity and volume, organizations must store vast amounts of data, which is costly and introduces risks such as performance degradation and increased vulnerability to attacks on the logs themselves.

Likewise, the known solutions lack scalability for long-term threats as most existing approaches process logs in temporal batches (e.g., every 24 hours). This becomes impractical when dealing with APTs that unfold over extended periods, often spanning months. This is because key events from an APT can be distributed across multiple batches and existing methods can't detect them as there is no continuity from batch to batch. This inability to handle incremental data over time limits their effectiveness in real-world scenarios where threats evolve gradually.

Most of the existing solutions employ GNNs to detect subtle, hard to detect APTs from provenance graphs, which may contain thousands of nodes and edges. One common limitation of these methods is that the performance of GNN-based methods heavily depends on the quality and completeness of the input logs. Missing, noisy, or incomplete data can degrade their ability to detect anomalies considerably.

In light of these, new and improved solutions for system log compression are therefore needed.

## DESCRIPTION OF THE INVENTION

To that end, the present invention proposes, according to one aspect, a method for system log compression. The method is implemented/carried out by one or more processors that perform the following steps: obtain at least one first batch of complete and untampered system log entries; represent the system log entries as a provenance graph, with nodes of the graph representing system entities and edges representing relationships between the system entities, wherein each node and edge of the graph is assigned a set of features; embed the system entities and relationships within the provenance graph into a continuous multidimensional vector space using an embedding algorithm; identify expected behavior deviations of the system log entries using the embedded continuous multidimensional vector space; compare the identified system log entries that deviate from an expected behavior with a given threshold; and label system log entries as anomalous if their deviation is different to or falls outside the given threshold, and compress the system log entries by discarding those are not labeled as anomalous.

In some embodiments, the labeled system log entries are further stored in a memory or database.

In some embodiments, the given threshold comprises a given value that is selected to achieve an acceptable percentage of false positives in the anomaly detection. Alternatively, the given threshold is selected using a clustering-based thresholding technique, including K-means or DBSCAN, or using a heuristic approach.

In some embmodiments, the identification of the expected behavior deviations further comprises using a list of predefined potentially suspicious or anomalous behaviors.

In some embodiments, the labeling is performed using a neural network.

In some embodiments, the embedding algorithm executes a Knowledge Graph Reasoning, KGR, technique, such as TransE, TransH, or TransR. In other embodiments, the embedding algorithm comprises a (graph) neural network or a transformer. Also, in some embodiments, the embedding algorithm can comprise a clustering algorithm, for instance, K-Means, DBSCAN or Gaussian Mixture Models, which can be combined with a neural network.

In some embodiments, the set of features is processed using hierarchical feature hashing.

In some embodiments, the at least one first batch of system log entries is acquired every certain period of time.

In some embodiments, the method further comprises iteratively refining the embedding of the system entities and relationships through a training procedure.

In some embodiments, the method further comprises triggering an alarm when a system log entry is identified from an expected behavior.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the present invention provides a solution for system log compression in which system logs are represented as a provenance graph that captures system events in a causal structure and maps them into a multidimensional embedding space. By leveraging graph reasoning and, in some embodiments, a predefined list of anomalous behaviors, the embedding space is used to identify and retain only anomalous patterns.

Non-anomalous queries are discarded, effectively compressing the logs while preserving the most critical information for analysis.

Some of the advantages of the present invention are:

- Enhanced detection of prolonged APTs: The method is designed to detect APTs that extend over long periods (e.g., months). By selectively storing and focusing on parts of the logs related to potential attacks, the invention can continuously track and monitor suspicious activities over several days or weeks. This approach overcomes a significant limitation of existing methods, which process all logs simultaneously, making it challenging, or impossible in some cases, to identify slow and stealthy attack patterns.
- The invention supports the integration of various KGR techniques, allowing tailoring the reasoning process to the specific nature of the logs and the types of attacks being analyzed. This adaptability enhances the ability to detect sophisticated and evolving attack strategies, providing a robust tool for addressing diverse security threats.
- While optimized for detecting malicious activities, the invention extends beyond cybersecurity to identify other types of anomalies in system behavior. For example, it can aid in uncovering irregularities caused by misconfigurations, incorrect permissions, or operational inefficiencies. This versatility ensures the method's utility across multiple domains and scenarios.

## BRIEF DESCRIPTION OF THE DRAWINGS

The previous and other advantages and features will be more fully understood from the following detailed description of embodiments, with reference to the attached figures, which must be considered in an illustrative and non-limiting manner, in which:

Fig. 1 shows an example of a provenance graph, as disclosed in [1].

Fig. 2 schematically shows an overview of the proposed method, according to an embodiment.

Fig. 3 schematically shows a graphical representation of a query in the multidimensional embedding space.

## DETAILED DESCRIPTION OF THE INVENTION AND OF PREFERRED EMBODIMENTS

Data logging is a cornerstone of modern security operations, capturing critical system activities such as file access, process execution, and network communication through tools like Windows Event Tracing, Linux Audit, and CamFlow. By recording a detailed history of interactions, logging provides security analysts with the ability to trace suspicious events and gain a comprehensive understanding of the full ramifications of attacks. Logs play a crucial role in both real-time threat detection and post-incident investigations, making them indispensable for organizations striving to detect, analyze, and respond to malicious activities effectively.

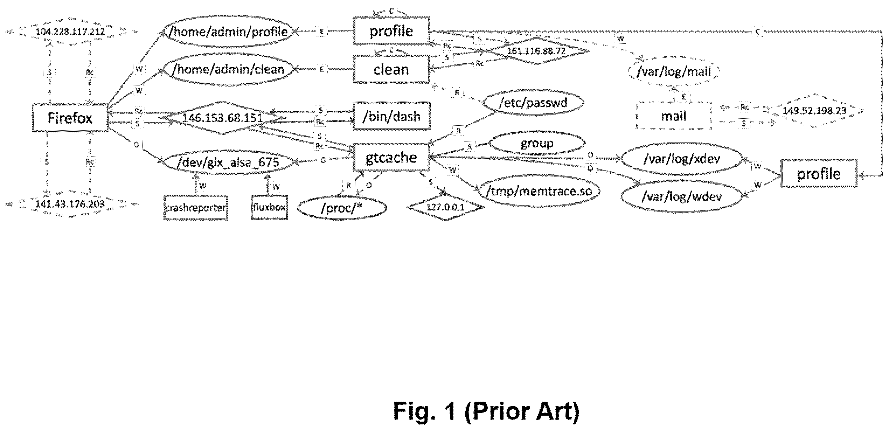

To simplify the task for security analysts and enhance the efficiency of log analysis, event logs can be transformed into provenance graphs. These graphs offer a high-level visual representation of interactions and dependencies within a system, enabling analysts to uncover patterns, trace event flows and detect anomalies with greater precision and efficiency. In a provenance graph, nodes represent system entities such as files, processes, or network connections, while edges capture relationships between these entities, including causal and temporal links. For example, an edge might indicate that a process accessed a specific file, spawned a child process, or initiated a network connection. Fig.1 illustrates an example of a provenance graph.

In recent years, solutions leveraging provenance graphs have emerged as powerful tools for detecting sophisticated Advanced Persistent Threats (APTs) that traditional methods often fail to identify. Unlike signature-based intrusion detection systems (IDSes), which rely on predefined indicators of compromise, provenance-based IDSes analyze patterns and relationships within the graph to uncover previously unseen anomalies, including those linked to zero-day vulnerabilities. A key advantage of provenance graphs is their ability to preserve causal and temporal chains of events. This capability allows analysts to trace the full lifecycle of an attack, from its initial entry point to its ultimate impact, providing a comprehensive, end-to-end view. Such traceability is critical for understanding complex, multi-stage attacks and identifying which entities-such as files, processes, or network connections-were compromised and how they were exploited during the attack. The rich contextual insights offered by provenance graphs enable security teams to respond with greater precision and efficiency. Analysts can pinpoint attack vectors, accurately assess the extent of the damage, and implement targeted mitigation strategies. Beyond immediate incident response, provenance graphs play a significant role in enhancing long-term security. By exposing systemic vulnerabilities and recurring patterns in adversarial behavior, these graphs empower organizations to proactively strengthen their defenses and adapt to evolving threat landscapes.

On the other hand, knowledge graphs are structured representations of information, where entities -- such as people, places, concepts, or objects -- are depicted as nodes, and relationships between them are represented as edges. This graph-based structure provides a rich and flexible framework for modeling complex information, enabling systems to effectively reason over interconnected data. By linking entities through various types of relationships, such as hierarchical, causal, or associative, knowledge graphs facilitate the discovery of implicit connections and valuable insights within large datasets.

Knowledge Graph Reasoning (KGR) [2] refers to a set of techniques used to infer new relationships or extract insights from the current structure of a knowledge graph. Among these techniques, embedding-based reasoning maps entities and relationships into continuous multidimensional vector spaces, enabling tasks such as link inference, anomaly detection, and predictive modeling. By integrating graph reasoning with machine learning, it becomes possible to analyze the graph's structure and relationships to uncover hidden patterns, detect anomalies, and generate actionable insights. In the context of log data, these insights can be utilized to determine which information is critical to retain and which can be safely discarded. This approach preserves the utility of the retained log data while optimizing both storage and analysis efficiency.

One notable method for KGR is TransE (Translation-based Embedding) [3], an embedding-based approach that represents nodes and relationships as vectors in a continuous multidimensional vector space. TransE models relationships as translations between entity embeddings. Specifically, for a given relationship between two entities (e.g., "A is the parent of B"), the embedding of entity A, when added to the vector representing the relationship, should ideally result in the embedding of entity B. This approach provides an efficient representation of complex relationships in a low-dimensional space, making it computationally efficient for large-scale graphs.

The problem addressed by the present invention is the efficient compression of system logs to keep only those log entries linked with nodes or edges that exhibit suspicious or potentially malicious behavior. The objective is to reduce storage requirements while preserving the utility of the retained log information. To achieve this, the invention provides a method that integrates provenance graphs with an embedding algorithm, in some embodiments based on KGR techniques, to systematically identify and retain anomalous log entries. Nevertheless, it should be noted that other embedding algorithms employing different embedding techniques can also be used, for instance, neural networks or transformers, or even clustering methods.

In a particular embodiment, the proposed method operates on system log batches collected at regular intervals (e.g., daily, weekly, etc.): for example, the method could store 24 hours' worth of system logs and then process them to determine which entries should be retained and which can be safely eliminated. The proposed solution is designed to identify (and store any information concerning) suspicious nodes or interactions that cannot yet be definitively classified as attacks. By selectively retaining these potentially anomalous entries, the invention allows for further analysis as more data becomes available, enabling it to confirm whether the flagged events represent actual attacks or false alarms. This ensures that the data remains concise, manageable, and focused on the most critical (or potentially critical) events. To maintain continuity, the retained system log entries are merged with those from previous days, and the method is iteratively reapplied to optimize the log data that needs to be stored each time.

To construct the provenance graphs, tools such as Graphviz or custom graph-processing libraries can be employed. Each entity (node or edge) in the graph must be traceable back to the original logs, maintaining a clear correspondence between the graph and the raw data.

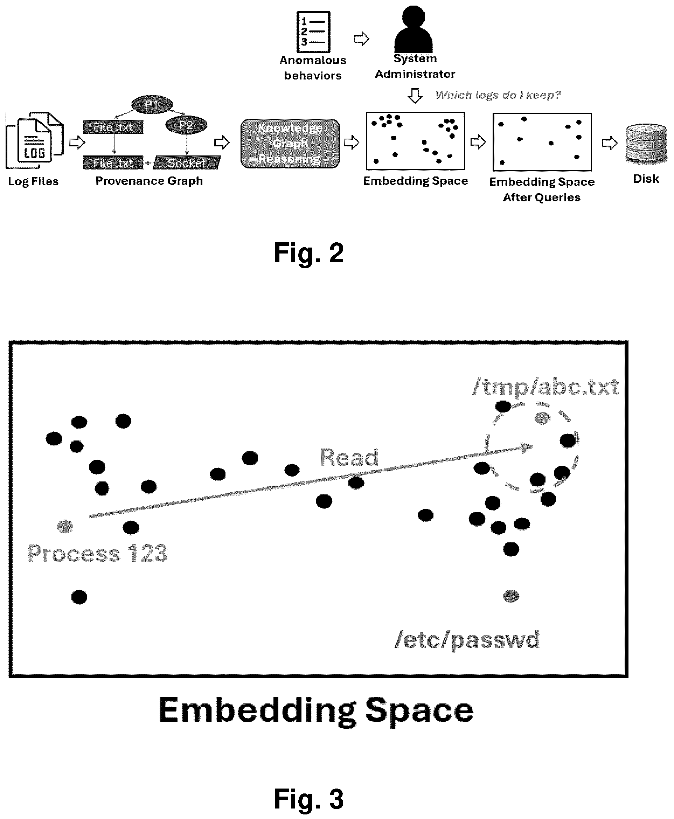

By analyzing these graphs, the method aims to label/flag system events that deviate from expected behavior. Labeled/Flagged events can be stored for further analysis, while unlabeled/unflagged events are discarded. Fig. 2 shows an overview of the proposed method and the problem formulation.

In a preferred embodiment, the embedding algorithm leverages KGR techniques, such as TransE [3] or TransR [7], among others, to embed the entities and relationships within the graph into a continuous multidimensional vector space $R^d$, with d indicating the number of dimensions or vector size. The choice of graph reasoning technique depends on the type of logs and queries being analyzed. Without loss of generality, TransE is chosen because it is simple and effective in capturing the fundamental structure of knowledge graphs. In this space, each entity $v \in V$ is represented by a d-dimensional vector, and each relationship $r \in E$ is represented by a d-dimensional translation vector. The embedding process aims to satisfy the condition for valid triplets (h,r,t), where h is the head entity, *r* is the relation, and *t* is the tail entity, ensuring that: $h+r \approx t$. This embedding process transforms the graph into a structured representation that facilitates efficient analysis of relationships and patterns.

Once embeddings are learned, anomaly detection is reframed using the embedded space to identify deviations. This task is analogous to the link prediction task in KGR.

In some embodiments, administrators can query the embedding space with a list of potentially suspicious or anomalous behaviors. The list represents high-risk or unusual activities warranting closer scrutiny. Administrators can leverage resources like the MITRE ATT&CK framework (https://attack.mitre.org/) to identify known attack techniques and tactics, providing a well-informed basis for defining behaviors to monitor in the logs.

Then, anomalies are identified by measuring the degree of deviation of queried events or (h,r,t) triplets from the learned patterns. Significant deviations, such as unusually high distances or outliers in the embedding space, indicate potential anomalies. For example, in a security context, an anomaly might represent an unexpected interaction between processes or an unusual sequence of file accesses.

To formalize anomaly detection, a query (h1, r1, t1) is considered. A deviation is labeled when t1 is significantly distant from the query h1+r1 in the embedding space. Determining an appropriate threshold $\tau$ for deviation is critical for achieving a balance between sensitivity and specificity (i.e., to minimize false negatives and false positives). A threshold $\tau$ that is too low would result in excessive false positives, labeling most events as anomalous. Conversely, a high threshold may overlook subtle but important anomalies.

Several strategies can be employed to define the threshold:

- Manual thresholding: It sets a realistic value based on data analysis to achieve an optimal balance considering that it would be acceptable to have a small % of false positives but avoids having false negatives.
- Clustering-based thresholding: It uses clustering techniques like K-Means or DBSCAN to identify clusters in the embedding space. The threshold can then be set as the maximum distance within the smallest cluster or the average maximum distance of all clusters.
- Heuristic approaches: It explores data-driven heuristics to refine the threshold based on observed patterns.

By integrating provenance graphs, embedding techniques, and advanced anomaly detection strategies, the invention ensures that the retained data remains highly relevant for security analysis. This approach provides a scalable and efficient solution to the challenge of managing and analyzing large volumes of system logs, paving the way for improved anomaly detection and system monitoring.

Regarding the invention's design, the proposed anomaly detection method operates under the assumption that system logs are complete and untampered by adversaries. These are standard assumptions commonly adopted in prior work. For the detection process to be effective, all legitimate interactions and events within the system must be accurately represented in the provenance graph, ensuring a reliable foundation for identifying potential anomalies. Incomplete or corrupted logs could lead to false positives or false negatives, compromising the accuracy of the detection process.

Moreover, each node and edge in the provenance graph is assigned a set of features, with nodes representing system components such as files, processes, sockets, and IP addresses. For instance, a file node might include attributes such as file type, file path, and format, while edges -- representing relationships between nodes -- can also have associated features such as open, read or write. To ensure that events within the system are uniquely identifiable and to avoid overlaps between multiple events, it is important to define an adequate and carefully selected set of features. While the method is flexible enough to support a wide range of attributes, the inclusion of sufficiently distinct and relevant features is essential for accurately distinguishing events within the system.

To generalize these features and enable reasoning at a higher level of abstraction, in some embodiments, hierarchical feature hashing is also used. This maps high-dimensional input vectors into a lower-dimensional feature space while preserving the hierarchical relationships of the original data. For instance, files located within the same parent directory (e.g., /var/log/wdev and /var/log/xdev) are mapped closer together in the feature space compared to files located in entirely different directories (e.g., /home/admin/profile). Hierarchical feature hashing encodes a node's attributes at multiple levels of hierarchy, such as generating substrings from a file path like /home/admin/clean to create /home, /home/admin, and /home/admin/clean, or splitting an IP address such as 161.116.88.72 into 161, 161.116, 161.116.88, and 161.116.88.72. Each substring is then projected into the feature space, allowing the retention of hierarchical relationships and enabling both granular and generalized reasoning over system logs.

Once the provenance graph is created and features are initialized, embeddings are generated for the graph's nodes and edges. Each node and edge are assigned a d-dimensional vector in a continuous embedding space R^d. Initially, these embeddings are randomly initialized, ensuring no bias or prior assumptions about the relationships within the graph. This randomized starting point provides a neutral basis for learning meaningful patterns during the training process.

In some embodiments, the embeddings are then iteratively refined through a training procedure designed to encode the graph's structural and relational patterns into the embedding space. For instance, using KGR techniques like TransE, the model learns embeddings that reflect the inherent structure of the provenance graph. TransE operates under the principle that valid relationships between entities can be modeled as translations in the embedding space. Specifically, for a valid triplet (h,r,t), where h is the head entity, r is the relation, and t is the tail entity, the embeddings are optimized such that: $h + r \approx t$.

To evaluate how well a triplet conforms to this principle, TransE computes a score using the L1 or L2 norm of the euclidean distance of the embedding vectors:

$$\text{score}(h, r, t) = \| h + r - t \|_{1/2}$$

A lower score indicates a plausible relationship, while a higher score suggests a deviation from normal patterns. The training objective is to minimize this score for valid triplets while maximizing it for corrupted (invalid) triplets. Corrupted triplets are generated by randomly replacing either the head or tail entity in a valid triplet, producing examples of unlikely relationships. The training process minimizes a margin-based ranking loss function defined as:

$$\mathcal{L} = \sum_{(h,r,t) \in \mathcal{G}} \sum_{(h',r,t') \in \mathcal{G'}} \max\left(0, \gamma + \|h+r-t\|_2 - \|h'+r-t'\|_2\right),$$

where G is the set of valid triplets, G' is the set of corrupted triplets and y>0 is a margin hyperparameter, ensuring the model separates valid and invalid triplets in the embedding space. During training, the embeddings are iteratively updated to minimize the loss, thereby learning patterns of normal behavior within the provenance graph. As training progresses, entities and relationships that co-occur or follow predictable patterns are positioned closer together in the embedding space, while rare or anomalous interactions are positioned further apart.

This embedding process transforms the provenance graph into a structured vector space that captures the relationships between entities. The learned embeddings serve as the foundation for anomaly detection, enabling the invention to evaluate new or suspicious triplets against the learned patterns.

Once the embedding model is trained, the embedding space encodes the relationships between entities and relations from the provenance graph as structured vectors. This structured representation enables efficient querying to identify anomalies or deviations in system behavior.

The queries are derived from a predefined list of triplets *(h, r, t)* where h is the head entity, r is the relationship, and t is the tail entity. Each query seeks to evaluate how closely the embedding of the tail entity t aligns with the vector sum of the head entity h and the relationship r. This alignment is central to the embedding model, which is designed to satisfy the condition: $h+r \approx t$.

To perform a query, the embeddings are used to compute the distance between $h+r$ and t in the embedding space. Similarly to the score function described above, the distance typically calculated using the L1 or L2 norm:

$$d(h+r, t) = ||h+r-t||_{1/2}$$

The objective of the query is to evaluate this distance and determine whether the observed triplet deviates from the normal patterns learned during training. A small distance indicates that t is closely aligned with h+r, suggesting that the triplet conforms to expected behavior. Conversely, a large distance implies a deviation, signaling a potential anomaly.

For each query triplet (h,r,t), the computed distance d(h+r,t) is compared to a predefined anomaly threshold $\tau$. This threshold determines the boundary between normal and anomalous behavior:

- If d(h+r,t) <= $\tau$, the triplet is considered consistent with normal system behavior.
- If d(h+r,t) > $\tau$, the triplet is flagged as an anomaly.

In some embodiments, to execute the proposed method, a system administrator begins by defining a list of potentially suspicious behaviors or high-risk interactions that warrant investigation. These behaviors are represented as triplets of the form (h,r,t), which are then used to query the embedding space.

For instance, consider the triplet query (Process123, read, /etc/passwd), where Process123 and /etc/passwd are entities and read is their relationship. Using the already trained TransE embeddings, the system computes the distance:

$$\text{Score (Process123, read, /etc/passwd)} = ||Process123+read-/etc/passwd||_2$$

If the edge (Process123, read, /etc/passwd) exists in the logs and the computed score is low (within the threshold range or $<\tau$), the invention concludes that no anomaly is present. This outcome signifies that the observed interaction is consistent with learned patterns of normal system behavior.

Conversely, if the edge (Process123, read, /etc/passwd) is present in the logs but the score is high (outside the threshold range or $>\tau$), the method triggers an anomaly. A high score indicates that the triplet deviates from expected relationships, suggesting unusual or suspicious behavior that merits further investigation. Table 1 summarizes all possible scenarios and highlights when the method would raise an alarm.

Table 1: Summary table indicating when the method would trigger alarms.

| Link exists? | Predicted Score | Trigger Anomaly? | Reason |
|---|---|---|---|
| YES | LOW | NO | The predicted link corresponds to a real, logged relationship in the graph and is plausible (low score), indicating normal behavior. |
| YES | HIGH | YES | The predicted link corresponds to a real, logged relationship but is flagged as implausible (high score), indicating it deviates from typical patterns. |

Fig. 3 illustrates an example of the query process in a 2D embedding space for the query (Process123, read, /etc/passwd). In this visualization, the dashed circle represents the threshold $\tau$. The figure shows that the file /etc/passwd lies outside the threshold circle, indicating a high score. Consequently, the method can trigger an alarm, as the observed activity is recorded in the logs but deviates significantly from normal system behavior. This demonstrates the ability of the method to flag suspicious events that might otherwise go unnoticed.

The invention can leverage any KGR technique and it's flexible to launch other types of queries. Moreover, the proposed method can concatenate or combine queries to perform more advanced reasoning on the attacks present in the graph. For example, it can use logical operators to reason about the queries and evaluate if they are met simultaneously or at least one of them is positive. The method can be adapted to work in an online fashion using other methods for anomaly detection. For example, it could use methods based on neural networks like [4,6] to label/flag the new events in the system as potential threats. If the events are flagged, they are stored while if they are not considered threats, they can be ignored. Note that in this case the administrator won't have to predefine a list of attacks because the neural network will be trained with the normal (or benign) system behavior. Therefore, any new event that deviates from this behavior will be labeled/flagged as a potential threat.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

**References:**

1. Cheng, Z., Lv, Q., Liang, J., Wang, Y., Sun, D., Pasquier, T., & Han, X. (2024, May). KAIROS: Practical intrusion detection and investigation using whole-system provenance. In 2024 IEEE Symposium on Security and Privacy (SP) (pp. 3533-3551). IEEE.

2. Chen, X., Jia, S., & Xiang, Y. (2020). A review: Knowledge reasoning over knowledge graph. Expert systems with applications, 141, 112948.

3. Bordes, A., Usunier, N., Garcia-Duran, A., Weston, J., & Yakhnenko, O. (2013). Translating embeddings for modeling multi-relational data. Advances in neural information processing systems, 26.

4. Rehman, M. U., Ahmadi, H., & Hassan, W. U. (2024, February). FLASH: A Comprehensive Approach to Intrusion Detection via Provenance Graph Representation Learning. In 2024 IEEE Symposium on Security and Privacy (SP) (pp. 139-139). IEEE Computer Society.

5. Zeng, J., Chua, Z. L., Chen, Y., Ji, K., Liang, Z., & Mao, J. (2021, February). WATSON: Abstracting Behaviors from Audit Logs via Aggregation of Contextual Semantics. In NDSS.

6. Jia, Z., Xiong, Y., Nan, Y., Zhang, Y., Zhao, J., & Wen, M. (2024). {MAGIC}: Detecting Advanced Persistent Threats via Masked Graph Representation Learning. In 33rd USENIX Security Symposium (USENIX Security 24) (pp. 5197-5214).

7. Lin, Y., Liu, Z., Sun, M., Liu, Y., & Zhu, X. (2015, February). Learning entity and relation embeddings for knowledge graph completion. In Proceedings of the AAAI conference on artificial intelligence (Vol. 29, No. 1).

8. Hamilton, W., Ying, Z., & Leskovec, J. (2017). Inductive representation learning on large graphs. Advances in neural information processing systems, 30.

**Claims**

1. A method for system log compression, the method comprising performing by one or more processors the following steps:

   obtaining at least one first batch of complete and untampered system log entries;
   representing the system log entries as a provenance graph, with nodes of the graph representing system entities and edges representing relationships between the system entities, wherein each node and edge of the graph is assigned a set of features;
   embedding the system entities and relationships within the provenance graph into a continuous multidimensional vector space using an embedding algorithm;
   identifying expected behavior deviations of the system log entries using the embedded continuous multidimensional vector space;
   comparing the identified system log entries that deviate from an expected behavior with a given threshold; and
   labeling system log entries as anomalous if their deviation is different to or falls outside the given threshold, and compressing the system log entries by discarding those are not labeled as anomalous.

**2.** The method of claim 1, wherein the labeled system log entries are further stored in a memory or database.

**3.** The method of any one of the previous claims, wherein the given threshold comprises a given value that is selected to achieve an acceptable percentage of false positives in the anomaly detection.

**4.** The method of any one of the previous claims 1-2, wherein the given threshold is selected using a clustering-based thresholding technique, including K-means or DBSCAN.

**5.** The method of any one of the previous claims 1-2, wherein the given threshold is selected using an heuristic approach.

**6.** The method of any one of the previous claims, wherein the identification of the expected behavior deviations further comprises using a list of predefined potentially suspicious or anomalous behaviors.

**7.** The method of any one of the previous claims 1-5, wherein the labeling is performed using a neural network.

**8.** The method of any one of the previous claims, wherein the embedding algorithm executes a Knowledge Graph Reasoning, KGR, technique.

**9.** The method of claim 8, wherein the KGR technique comprises TransE, TransH, or TransR.

**10.** The method of any one of the previous claims, wherein the set of features is processed using hierarchical feature hashing.

**11.** The method of any one of the previous claims, wherein the at least one first batch of system log entries is acquired every certain period of time.

**12.** The method of any one of the previous claims, further comprising iteratively refining the embedding of the system entities and relationships through a training procedure.

**13.** The method of any one of the previous claims, further comprising triggering an alarm when a system log entry is identified from an expected behavior.

**14.** A system for system log compression, comprising a memory and at least one processor, wherein the at least one processor is configured to:

obtain at least one first batch of complete and untampered system log entries;
represent the system log entries as a provenance graph, with nodes of the graph representing system entities and edges representing relationships between the system entities, wherein each node and edge in the graph is assigned a set of features;
embed the system entities and relationships within the provenance graph into a continuous multidimensional vector space using an embedding algorithm;
identify expected behavior deviations of the system log entries using the embedded continuous multidimensional vector space;
compare the identified system log entries that deviate from an expected behavior with a given threshold; and
label system log entries as anomalous if their deviation is different to or falls outside the given threshold, and compress the system log entries by discarding those are not labeled as anomalous.

**15.** A non-transitory computer readable medium including code instructions that when executed in a computer system implement the steps of the method of any one of claims 1 to 12.

Fig. 1 (Prior Art)

**Fig. 2**

# Embedding Space

**Fig. 3**

Europäisches
Patentamt

European
Patent Office

Office européen
des brevets

# EUROPEAN SEARCH REPORT

**Application Number**

EP 24 38 3378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAYNE LUCAS ET AL: "Log File Anomaly Detection Using Knowledge Graph Completion", PROCEEDINGS OF THE 2024 8TH INTERNATIONAL CONFERENCE ON DEEP LEARNING TECHNOLOGIES, [Online] 15 July 2024 (2024-07-15), pages 42-48, XP093246865, ISBN: 979-8-4007-1686-7 Retrieved from the Internet: URL:https://dl.acm.org/doi/pdf/10.1145/3695719.3695726> [retrieved on 2025-02-05] * Sections 1, 2, 3; figures 1, 2, 3 * | 1-15 | INV. G06F21/50 H04L9/40 |
| X | ZENG JUN ET AL: "WATSON: Abstracting Behaviors from Audit Logs via Aggregation of Contextual Semantics", PROCEEDINGS 2021 NETWORK AND DISTRIBUTED SYSTEM SECURITY SYMPOSIUM, [Online] 21 February 2021 (2021-02-21), XP093246854, Reston, VA DOI: 10.14722/ndss.2021.24549 ISBN: 978-1-891562-66-2 Retrieved from the Internet: URL:https://www.ndss-symposium.org/wp-content/uploads/ndss2021_7A-3_24549_paper.pdf> [retrieved on 2025-02-05] * Sections II - VI; figure 9; table 3 * | 1-15 | |
| | | | TECHNICAL FIELDS SEARCHED (IPC) |
| | | | G06F H04L |

The present search report has been drawn up for all claims

| Place of search | Date of completion of the search | Examiner |
|---|---|---|
| The Hague | 6 February 2025 | Pichler Trauber, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Patent documents cited in the description**

- US 11423146 B2
- CN 112765603 B
- US 20120137367 A1
- US 12015628 B1
- US 10038710 B2

**Non-patent literature cited in the description**

- KAIROS: Practical intrusion detection and investigation using whole-system provenance. **CHENG, Z.** ; **LV, Q.** ; **LIANG, J.** ; **WANG, Y.** ; **SUN, D.** ; **PASQUIER, T.** ; **HAN, X.** 2024 IEEE Symposium on Security and Privacy (SP). IEEE., May 2024, 3533-3551
- **CHEN, X.** ; **JIA, S.** ; **XIANG, Y.** A review: Knowledge reasoning over knowledge graph. *Expert systems with applications*, 2020, vol. 141, 112948
- **BORDES, A.** ; **USUNIER, N.** ; **GARCIA-DURAN, A.** ; **WESTON, J.** ; **YAKHNENKO, O.** Translating embeddings for modeling multi-relational data. *Advances in neural information processing systems*, 2013, 26
- FLASH: A Comprehensive Approach to Intrusion Detection via Provenance Graph Representation Learning. **REHMAN, M. U.** ; **AHMADI, H.** ; **HASSAN, W. U.** 2024 IEEE Symposium on Security and Privacy (SP). IEEE Computer Society, February 2024, 139-139
- **ZENG, J.** ; **CHUA, Z. L.** ; **CHEN, Y.** ; **JI, K.** ; **LIANG, Z.** ; **MAO, J.** WATSON: Abstracting Behaviors from Audit Logs via Aggregation of Contextual Semantics. *NDSS*, February 2021
- **JIA, Z.** ; **XIONG, Y.** ; **NAN, Y.** ; **ZHANG, Y.** ; **ZHAO, J.** ; **WEN, M.** MAGIC}: Detecting Advanced Persistent Threats via Masked Graph Representation Learning. *33rd USENIX Security Symposium (USENIX Security 24)*, 2024, 5197-5214
- **LIN, Y.** ; **LIU, Z.** ; **SUN, M.** ; **LIU, Y.** ; **ZHU, X.** Learning entity and relation embeddings for knowledge graph completion. *Proceedings of the AAAI conference on artificial intelligence*, February 2015, vol. 29 (1)
- **HAMILTON, W.** ; **YING, Z.** ; **LESKOVEC, J.** Inductive representation learning on large graphs. *Advances in neural information processing systems*, 2017, 30